(19) Europäisches Patentamt
European Patent Office
Office européen des brevets

(11) Veröffentlichungsnummer : **0 023 666**
**B1**

(12) # EUROPÄISCHE PATENTSCHRIFT

(45) Veröffentlichungstag der Patentschrift : **13.10.82**

(51) Int. Cl.$^3$ : **C 09 B 1/20**, C 09 B 55/00, C 08 K 5/00

(21) Anmeldenummer : **80104324.1**

(22) Anmeldetag : **23.07.80**

(54) **Anthrachinon-Azomethin-Verbindungen, Verfahren zu ihrer Herstellung sowie Verfahren zum Pigmentieren organischer makromolekularer Stoffe.**

(30) Priorität : **04.08.79 DE 2931711**

(43) Veröffentlichungstag der Anmeldung : **11.02.81 (Patentblatt 81/06)**

(45) Bekanntmachung des Hinweises auf die Patenterteilung : **13.10.82 Patentblatt 82/41**

(84) Benannte Vertragsstaaten : **CH DE FR GB IT LI**

(56) Entgegenhaltungen :
**EP A 0 008 063**
**DE A 2 025 429**
**CHEMICAL ABSTRACTS, Band 86, 1977 Seite 73, No. 107999k Columbus, Ohio, US**

(73) Patentinhaber : **BAYER AG**
**Zentralbereich Patente, Marken und Lizenzen**
**D-5090 Leverkusen 1, Bayerwerk (DE)**

(72) Erfinder : **Neeff, Rütger, Dr.**
**Berta-von Suttner-Strasse 22**
**D-5090 Leverkusen 1 (DE)**
Erfinder : **Rolf, Meinhard, Dr.**
**Berta-von-Suttner-Strasse 24**
**D-5090 Leverkusen 1 (DE)**
Erfinder : **Müller, Walter, Ing. grad**
**Pfarrer-Klein-Strasse 3**
**D-5090 Leverkusen 3 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 023 666 B1

Imprimerie Jouve, 18, rue St-Denis, 75001 Paris, France

# Anthrachinon-Azomethin-Verbindungen, Verfahren zu ihrer Herstellung sowie Verfahren zum Pigmentieren organischer makromolekularer Stoffe

Die Erfindung betrifft Anthrachinon-Azomethin-Verbindungen, die in einer ihrer tautomeren Strukturen der Formel

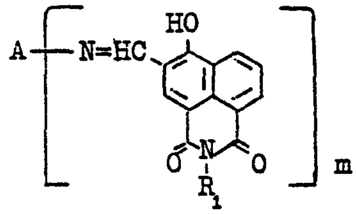

(I)

entsprechen, Verfahren zu ihrer Herstellung sowie ihre Verwendung als Pigmente.

Eine weitere tautomere Struktur des erfindungsgemäßen Pigmente entspricht der Formel

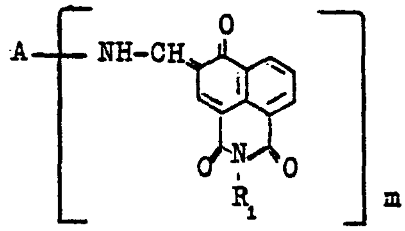

(Ia)

Der Einfachheit halber wird im folgenden jeweils nur die in Formel (I) dargestellte tautomere Form genannt. Es wird aber darauf hingewiesen, daß dieses keine Einschränkung der Erfindung bezüglich eines bestimmten tautomeren bedeutet.

In der Formel (I) bedeuten

A einen Sulfonsäuregruppen-freien, gegebenenfalls weitersubstituierten Anthrachinonrest, der vorzugsweise aus höchstens 5 kondensierten Ringen besteht,

$R_1$ Wasserstoff, gegebenenfalls substituiertes Aryl, vorzugsweise

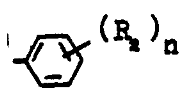

(II)

Heteroaryl, Cycloalkyl oder $C_1$-$C_{12}$-Alkyl, wobei die Alkylkette durch Sauerstoff oder Schwefel unterbrochen und/oder durch Hydroxyl- oder $N(R_3)_2$-Gruppen substituiert sein kann, —$N(R_3)_2$ oder

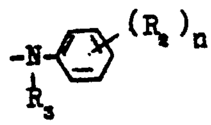

$R_2$ einen Substituenten

$R_3$ Wasserstoff, $C_1$-$C_4$-Alkyl, Cycloalkyl, gegebenenfalls substituiertes Aryl,

m 1, 2, 3 oder 4 und

n 0, 1, 2, 3, 4 oder 5.

Geeignete Substituenten $R_2$ sind beispielsweise Halogen wie Chlor und Brom, $C_1$-$C_4$-Alkyl, $C_1$-$C_4$-Alkoxy, Nitro, Trifluormethyl, Cyan, gegebenenfalls substituiertes carbamoyl, gegebenenfalls substituiertes Sulfamoyl, acylamino oder gegebenenfalls substituiertes Arylamino.

Gegebenenfalls substituiertes Aryl ($R_1$, $R_3$) ist vorzugsweise Phenyl, das durch die für $R_2$ genannten Reste substituiert sein kann.

Als Substituenten der Carbamoyl- und Sulfamoyl-gruppen kommen $C_1$-$C_4$-Alkyl, gegebenenfalls durch $C_1$-$C_4$-Alkyl, $C_1$-$C_4$-Alkoxy, Fluor, chlor, Brom oder Nitro substituiertes Phenyl und Benzyl in Frage.

Acylamino ist insbesondere $C_1$-$C_4$-Alkylcarbonylamino und gegebenenfalls im benzolkern durch Chlor, $C_1$-$C_4$-Alkyl, $C_1$-$C_4$-Alkoxy oder Nitro substituiertes Benzoylamino.

Gegebenenfalls substituiertes Arylamino ist insbesondere gegebenenfalls durch $C_1$-$C_4$-Alkyl, $C_1$-$C_4$-Alkoxy, Fluor, Chlor, Brom oder Nitro substituiertes Phenylamino.

Cycloalkyl ($R_1$, $R_3$) steht insbesondere für $C_3$-$C_7$-Cycloalkyl, bevorzugt für Cyclopentyl und

Cyclohexyl.

Geeignete Amino-anthrachinone der Formel

$$A\text{—}(\text{—}NH_2)_m \qquad (III)$$

worin m die oben angegebene Bedeutung besitzt, sind :

1-Amino-anthrachinon, 2-Amino-anthrachinon, 1-Amino-2-chlor-anthrachinon, 1-Amino-4-chloranthrachinon, 1-Amino-5-chlor-anthrachinon, 1-Amino-6-chloranthrachinon, 1-Amino-6-(7)-chloranthrachinon (Gemisch), 1-Amino-5,8-dichloranthrachinon, 1-Amino-2-bromanthrachinon, 1-Amino-2,4-dibromanthrachinon, 1-Amino-7-fluoranthrachinon, 1-Amino-6,7-difluoranthrachinon, 2-Amino-1-chloranthrachinon, 2-Amino-3-chloranthrachinon, 2-Amino-3-bromanthrachinon, 1-Amino-4-nitroanthrachinon, 1-Amino-5-nitroanthrachinon, 1-Amino-2-methylanthrachinon, 1-Amino-2-methyl-4-bromanthrachinon, 1-Aminoanthrachinon-2-carbonsäure, 1-Aminoanthrachinon-2-carbonsäureamid, 1-Aminoanthrachinon-2-carbonsäuremethylester, 1-Amino-4-nitroanthrachinon-2-carbonsäure, 1-Amino-2-acetylanthrachinon, 1-Amino-5-benzoylaminoanthrachinon, 1-Amino-4-benzoylaminoanthrachinon, 1-Amino-4-hydroxyanthrachinon, 1-Amino-5-hydroxyanthrachinon, 1-Amino-4-methoxyanthrachinon, 1-Amino-2-methoxy-4-hydroxyanthrachinon, 1-Amino-4-methylaminoanthrachinon, 1-Amino-4-cyclohexylaminoanthrachinon, 1-Amino-4-anilinoanthrachinon, 1-Amino-6-methylmercaptoanthrachinon, 2-Phenyl-6-amino-4,5-phthaloylbenzimidazol, 6-Chlor-2-amino-3,4-phthaloylacridon, 7-Chlor-2-amino-3,4-phthaloylacridon, 5-Chlor-8-amino-3,4-phthaloylacridon, 3-Methyl-6-amino-anthrapyridon, 3-Methyl-7-amino-anthrapyridon, 4-Amino-1,9-pyrazolanthron, 5-Amino-1,9-pyrazolanthron, 4-Amino-1,9-anthrapyrimidin, 5-Amino-1,9-anthrapyrimidin, 1,5-Diaminoanthrachinon, 1,4-Diamino-anthrachinon, 1,8-Diaminoanthrachinon, 2,6-Diaminoanthrachinon, 1,5-Diamino-4-chloranthrachinon, 1,4-Diamino-5-nitroanthrachinon, 1,5-Diamino-2,4,6,8-tetrabromanthrachinon, 1,5-Diamino-4,8-dihydroxyanthrachinon, 1,8-Diamino-4,5-dihydroxyanthrachinon, 4,4′-Diamino-1,1′-dianthrimid, 1-Amino-8-benzoylaminoanthrachinon 1-Amino-2-brom-4-(4-methylbenzolsulfonylamino)-anthrachinon, 1-Amino-4-(2-chlorbenzoylamino)-anthrachinon, 1-Amino-4-(3-chlorbenzoylamino)-anthrachinon, 1-Amino-4-(2,5-dichlorbenzoylamino)-anthrachinon, 1-Amino-4-(2,3,4,5-tetrachlorbenzoylamino)-anthrachinon, 1-Amino-4-(3-nitrobenzoylamino)-anthrachinon, 1-Amino-5-(2-chlorbenzoylamino)-anthrachinon, 1-Amino-5-(3-chlorbenzoylamino)-anthrachinon, 1-Amino-5-(4-chlorbenzoylamino)-anthrachinon, 1-Amino-5-(2,5-dichlorbenzoylamino)-anthrachinon, 1-Amino-5-(2,3,4,5-tetrachlorbenzoylamino)-anthrachinon, 1-Amino-5-(3-nitrobenzoylamino)-anthrachinon, 1-Amino-8-(2-chlorbenzoylamino)-anthrachinon, 1-Amino-8-(3-chlorbenzoylamino)-anthrachinon, 1-Amino-8-(3-chlorbenzoylamino)-anthrachinon, 1-Amino-8-(4-chlorbenzoylamino-anthrachinon, 1-Amino-8-(2,5-dichlorbenzoylamino)-anthrachinon, 1-Amino-8-(2,3,4,5-tetrachlorbenzoylamino)-anthrachinon, 1-Amino-8-(3-nitrobenzoylamino)-anthrachinon, 1-Amino-8-(3-nitrobenzoylamino)-anthrachinon, 1-Amino-6,7-dichloranthrachinon, 1-Amino-6-fluoranthrachinon und 1-Amino-2-methyl-4-chloranthrachinon.

Bevorzugte Anthrachinon-Azomethin-Pigmente entsprechen der Formel

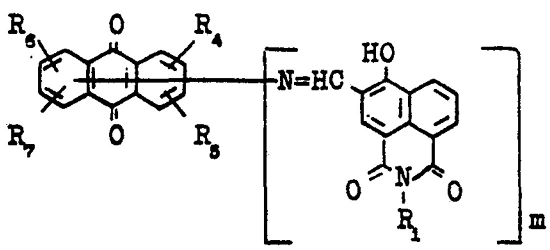

(IV)

worin

$R_1$ und m die oben angegebene Bedeutung haben und

$R_4$ Wasserstoff, halogen wie Fluor, Chlor, und Brom, Nitro, $C_1$-$C_4$-Alkyl, $C_1$-$C_4$-Alkoxy, $C_1$-$C_4$-Alkylamino, Benzylamino, Cyclohexylamino, $C_1$-$C_4$-Alkylmercapto, gegebenenfalls durch $C_1$-$C_4$-Alkyl, $C_1$-$C_4$-Alkoxy, Fluor, Chlor, Brom oder Nitro substituiertes Phenylmercapto, $C_1$-$C_4$-Alkylcarbonyl, $C_1$-$C_4$-Alkoxycarbonyl, gegebenenfalls durch $C_1$-$C_4$-Alkyl, $C_1$-$C_4$-Alkoxy, Chlor oder Nitro substituiertes Phenylamino, gegebenenfalls durch $C_1$-$C_4$-Alkyl, Benzyl oder Phenyl mono- oder disubstituiertes Carbamoyl, wobei Phenyl durch $C_1$-$C_4$-Alkyl, $C_1$-$C_4$-Alkoxy, Fluor, Chlor, Brom oder Nitro substituiert sein kann, Carboxy, Hydroxy, $C_1$-$C_4$-Alkylcarbonylamino, gegebenenfalls durch $C_1$-$C_4$-Alkyl, $C_1$-$C_4$-Alkoxy, Chlor, Brom oder Nitro substituiertes Benzoylamino oder gegebenenfalls $C_1$-$C_4$-Alkyl, $C_1$-$C_4$-Alkoxy, Fluor, Chlor, Brom oder Nitro substituiertes Benzolsulfonylamino,

$R_5$ Wasserstoff, Chlor, Hydroxy oder Methyl,

$R_6$ Wasserstoff, halogen wie Fluor, chlor oder Brom, Nitro, $C_1$-$C_4$-Alkyl, $C_1$-$C_4$-Alkoxy, $C_1$-$C_4$-Alkylamino, $C_1$-$C_4$-Alkylmercapto, gegebenenfalls durch $C_1$-$C_4$-Alkyl, $C_1$-$C_4$-Alkoxy, Fluor, Chlor, Brom oder Nitro substituiertes Phenylmercapto, $C_1$-$C_4$-Alkoxycarbonyl, $C_1$-$C_4$-Alkylcarbonyl, Benzylamino, Cyclohexylamino, gegebenenfalls durch $C_1$-$C_4$-Alkyl, $C_1$-$C_4$-Alkoxy, Chlor, Brom oder Nitro substituiertes

Phenylamino, Carboxy, Hydroxy, gegebenenfalls durch $C_1$-$C_4$-Alkyl, Benzyl oder Phenyl, mono- oder disubstituiertes Carbamoyl, wobei Phenyl durch $C_1$-$C_4$-Alkyl, $C_1$-$C_4$-Alkoxy, Fluor, Chlor, Brom oder Nitro substituiert sein kann, $C_1$-$C_4$-Alkylcarbonylamino, gegebenfalls durch $C_1$-$C_4$-Alkyl, $C_1$-$C_4$-Alkoxy, Chlor, Brom oder Nitro substituiertes Benzoylamino, $C_1$-$C_4$-Alkansulfonylamino oder gegebenenfalls durch $C_1$-$C_4$-Alkyl, $C_1$-$C_4$-Alkoxy, Fluor, Chlor, Brom oder Nitro substituiertes Benzolsulfonylamino und

$R_7$ Wasserstoff, Halogen wie Fluor, Chlor und Brom oder Hydroxy bedeuten.

Besonders bevorzugt sind Anthrachinon-Azomethin-Pigmente der Formel

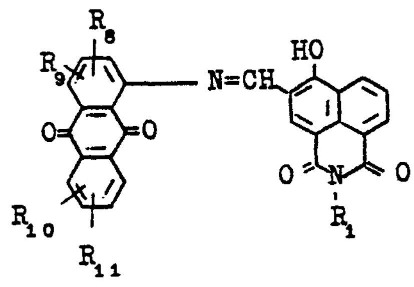

(V)

worin $R_1$ die oben angegebene Bedeutung hat und

$R_8$, $R_9$, $R_{10}$, $R_{11}$ Wasserstoff, Chlor, Brom, Carboxy, $C_1$-$C_4$-Alkoxycarbonyl, Carbamoyl, $C_1$-$C_4$-Alkylcarbonylamino, gegebenenfalls durch 1 oder 2 Nitro oder 1 bis 5 Chlor oder Brom substituiertes Benzoylamino, $C_1$-$C_4$-Alkansulfonylamino oder gegebenenfalls durch Methyl, Methoxy oder Chlor substituiertes benzolsulfonylamino oder einen Rest der Formel

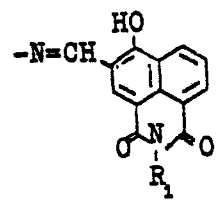

(VI)

bedeuten.

Die Herstellung der Anthrachinon-Azomethin-Pigmente (I) aus den Aminoanthrachinonen der Formel

$$A\text{—}(\text{—}NH_2)_m \qquad \text{(III)}$$

und den entsprechend substituierten 4-Hydroxy-naphthalimiden der Formel

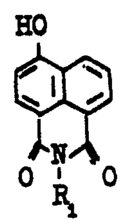

(VII)

in der $R_1$ die oben angegebene Bedeutung hat, kann nach mehreren Verfahren erfolgen.

1. Man kondensiert die entsprechend substituierten 4-Hydroxy-naphthalimide der Formel (VII) in einem gegen die Reaktionspartner inerten organischen Lösungsmittel bei 100-220 °C mit einem Orthoameisensäure-trialkylester der Formel

$$HC(OR)_3 \qquad \text{(VIII)}$$

in der R vorzugsweise für eine $C_1$-$C_4$-Alkylgruppe steht, und setzt anschließend die erhaltenen entsprechend substituierten 3-Alkoxymethylen-4-hydroxy-naphthalimide der Formel

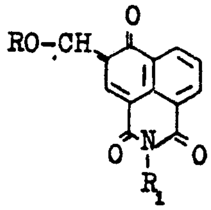

(IX)

in der $R_1$ die oben angegebene Bedeutung besitzt, in dem gleichen oder einem anderen organischen Reaktionsmedium bei 100-220 °C, vorzugsweise 120-180 °C, mit einem Amino-anthrachinon der Formel

$$A—(—NH_2)_m \quad (III)$$

um.

2. Man kondensiert die Amino-anthrachinone der Formel

$$A—(—NH_2)_m \quad (III)$$

in einem gegen die Reaktionspartner inerten organischen Lösungsmittel bei 100-220 °C, vorzugsweise 120-180 °C, mit einem Orthoameisensäuretrialkylester der oben genannten Formel (VIII) und setzt anschließend die erhaltenen Formiminoester der Formel

$$A—(—N{=}CH—OR)_m \quad (X)$$

in der R vorzugsweise für eine $C_1$-$C_4$-Alkylgruppe steht, in dem gleichen oder einem anderen organischen Reaktionsmedium bei 100-220 °C, vorzugsweise 120-180 °C, mit entsprechend substituierten 4-Hydroxy-naphthalimiden der oben genannten Formel (VII) um.

Als organische Lösungsmittel eignen sich für dit Verfahren (1) und (2) aromatische und heteroaromatische Verbindungen wie Toluol, Chlorbenzol, Pyridin, o-Dichlorbenzol, 1,2,4-Trichlorbenzol, Nitrobenzol, Alkohole wie Butanol, Diethylenglykolmonomethylether, Ether wie Ethylenglykol-dimethylether oder -diethylether, oder dipolar aprotische Lösungsmittel wie Dimethylformamid, Dimethylacetamid, N-Methylpyrrolidon, Tetramethylharnstoff, Dimethylsulfoxid oder Tetramethylensulfon.

3. In einem weiteren Verfahren überführt man die Aminoanthrachinone der Formel

$$A—(—NH_2)_m \quad (III)$$

bei 40-100 °C, vorzugsweise 40-80 °C, in einem gegen die Reaktionspartner inerten organischen Lösungsmittel mit einem Dialkylformamid und einem Thionylhalogenid, insbesondere Thionylchlorid, in die entsprechenden Formamidinium-halogenide der Formel

$$A—[—NH-CH=\overset{\oplus}{N}(R)_2]_m X^{\ominus}_m \quad (XI)$$

worin R vorzugsweise für eine $C_1$-$C_4$-Alkylgruppe und X für Chlor oder Brom steht, und kondensiert die erhaltenen Formamidinium-halogenide (XI) in dem gleichen oder einem anderen organischen Lösungsmittel bei 100-220 °C, vorzugsweise 120-180 °C, in Gegenwart eines säurebindenden Mittels mit entsprechend substituierten 4-Hydroxy-naphthalimiden der oben genannten Formel (VII).

Als organische Lösungsmittel für das Verfahren (3) eignen sich insbesondere aromatische Kohlenwasserstoffe wie Toluol, Chlorbenzol, o-Dichlorbenzol, 1,2,4-Trichlorbenzol, Nitrobenzol, Ether wie Ethylenglykol-dimethylether oder -diethylether oder dipolar aprotische Lösungsmittel wie Dimethylformamid, Diethylformamid, N-Methylpyrrolidon, Dimethylsulfoxid oder Tetramethylensulfon.

Als Dialkylformamide verwendet man vorzugsweise niedere Dialkylformamide wie Dimethyl- oder Diethylformamide, kann aber auch cyclische Alkyl-carbonsäureamide wie N-Methylpyrrolidon einsetzen.

Als säurebindende Mittel verwendet man in dem Verfahren (3) Alkali- oder Erdalkalimetall-hydroxide oder -carbonate oder Alkali- oder Erdalkalimetallsalze aliphatischer Carbonsäuren, vorzugsweise Natrium- oder Kalium-carbonat, hydrogencarbonat oder -acetat.

Die Verbindungen der Formel (I) fallen in einer für die Pigmentanwendung geeigneten Form an oder können durch an sich bekannte Nächbehandlungsverfahren in die geeignete Form übergeführt werden, z.B. durch Lösen oder Quellen in starken anorganischen Säuren wie Schwefelsäure und Austragen auf Eis. Die Feinverteilung kann auch durch Mahlen mit oder ohne Mahlhilfsstoffe wie anorganische Salze oder Sand, gegebenenfalls in Anwesenheit von Lösungsmitteln wie Toluol, Xylol, Dichlorbenzol oder N-Methylpyrrolidon erzielt werden. Farbstärke und Transparenz des Pigmentes können durch Variation der Nachbehandlung beeinflußt werden.

Die Anthrachinon-Azomethin-Pigmente der Formel (I) eignen sich aufgrund ihrer Licht- und Migrationsechtheit als Pigmente für die verschiedensten Pigmentapplikationen. Die Pigmente können zur

Herstellung von sehr echt pigmentierten Systemen, wie Mischungen mit anderen Stoffen, Zubereitungen, Anstrichmitteln, Druckfarben, gefärbtem Papier, und gefärbten makromolekularen Stoffen verwendet werden. Unter Mischung mit anderen Stoffen können z.B. solche mit anorganischen Weißpigmenten wie Titandioxid (Rutil) oder mit Zement verstanden werden. Zubereitungen sind z.B. Flushpasten mit organischen Flüssigkeiten oder Teige und Feinteige mit Wasser, Disperpiermitteln und gegebenenfalls Konservierungsmitteln. Die Bezeichnung Anstrichmittel steht z.B. für physikalisch oder oxidativ trocknende Lacke, Einbrennlacke, Reaktionslacke, Zweikomponentenlacke, Dispersionsfarben für wetterfeste Ueberzüge und Leimfarben. Unter Druckfarben sind solche für den Papier-, Textil- und Blechdruck zu verstehen. Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannt seien plastiche Massen wie Polyvinylchlorid, Polyvinylacetat, Polyvinylpropionat, Polyolefine z.B. Polyethylen oder Polyamide, Superpolyamide, Polymerisate und Mischpolymerisate aus Acrylester, Methacrylestern, Acrylnitril, Acrylamid, Butadien Styrol sowie Polyurethane und Polycarbonate. Die mit den beanspruchten Produkten pigmentierten Stoffe können in beliebiger Form vorliegen.

Die erfindungsgemäßen Pigmente (I) sind weiterhin ausgezeichnet wasserecht, ölecht, säureecht, kalkecht, alkaliecht, lösungsmittelecht, überlackierecht, überspritzecht, sublimierecht, hitzebständig, vulkanisierbeständig, sehr ergiebig und in plastischen Massen gut verteilbar.

Beispiel 1

10,32 g 95 %iges 1-Amino-4-benzoylamino-anthrachinon, 3,4 g Orthoameisensäuretrimethylester werden in 100 g Nitrobenzol etwa 2-3 Stunden auf 140-150 °C erhitzt, wobei man das entstehende Methanol über eine kurze Brücke abdestilliert. Nach Verschwinden des Ausgangsmaterials trägt man 6,5 g 4-Hydroxy-N-methyl-naphthalimid ein und erhitzt weitere 4 Stunden auf 140-150 °C. Nach Abkühlen auf 100 °C saugt man das in schönen langen braunroten Prismen kristallisierte Pigment ab, wäscht mit heißem Nitrobenzol und Methanol und erhält nach dem Trocknen bei 100 °C 15,3 g (92,2 % der Theorie) des rotbraunen Pigmentes der Formel

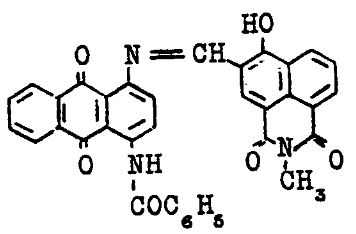

(XII)

| | | | |
|---|---|---|---|
| Berechnet : | C 72,54 | H 3,63 | N 7,25 |
| Gefunden : | C 72,41 | H 3,70 | N 7,30 |

Pigmente mit ausgezeichneten Eigenschaften und ähnlichen Farbtönen erhält man, wenn man anstelle des oben genannten 1-Amino-4-benzoylamino-anthrachinons das 1-Amino-4-(4-chlorbenzoylamino)-anthrachinon, das 1-Amino-4-(2,4-dichlorbenzoylamino)-anthrachinon, das 1-Amino-4-(3-nitrobenzoylamino)-anthrachinon oder das 1-Amino-4-(4-acetylaminobenzoylamino)-anthrachinon verwendet.

Beispiel 2

a) 11 g 97 %iges l-Amino-anthrachinon, 5,8 g Orthoameisensäure-trimethylester und 120 g Nitrobenzol werden etwa 3 Stunden bei 140-145 °C gerührt, wobei man das entstehende Methanol über eine Brücke abdestilliert und die Bildung des Formiminoesters der Formel

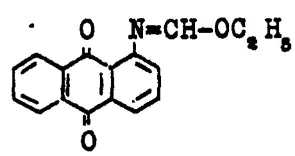

(XIII)

dünnschichtchromatographisch verfolgt. Nach Verschwinden des l-Amino-anthrachinons versetzt man das Reaktionsgemisch mit 11,4 g 4-Hydroxy-N-methylnaphthalimid und erhitzt noch 2-3 Stunden auf 145-150 °C. Darauf läßt man auf 100 °C abkühlen, saugt das in braun-orangefarbenen Nadeln auskristallisierte Pigment ab, wäscht mit heißem Nitrobenzol und Methanol und trocknet bei 100 °C. Man erhält so 21,1 g (93 % der Theorie) des gelbroten Pigmentes der Formel

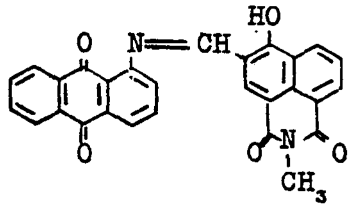

(XIV)

| | | | |
|---|---|---|---|
| Berechnet : | C 73,04 | H 3,48 | N 6,09 |
| Gefunden : | C 72,89 | H 3,39 | N 5,98 |

Das Pigment kann auch in der folgenden tautomeren Struktur vorliegen :

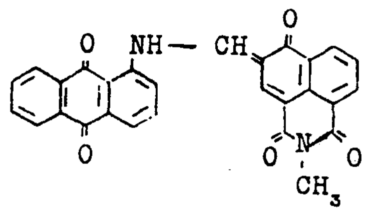

(XIVa)

b) 11 g 97 %iges l-Amino-anthrachinon, 4 g Dimethylformamid und 90 g Nitrobenzol werden bei 50-60 °C in 1 Stunde mit 7,3 g Thionylchlorid versetzt und bis zur Bildung des Formamidinium-chlorids der Formel

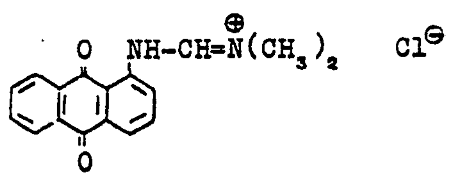

(XV)

noch etwa 1 Stunde gerührt. Zur Entfernung des überschüssigen Thionylchlorids rührt man noch 1 Stunde im Vakuum nach und versetzt dann das Reaktionsgemisch nacheinander mit 11,4 g 4-Hydroxy-N-methylnaphthalimid und 12,5 g wasserfreiem Natriumacetat und erhitzt in etwa 1 Stunde auf 150-160 °C. Man rührt bis zur Beendigung der Bildung des in braum-orangefarbenen Prismen kristallisierten Pigmentes bei 150-160 °C, saugt dann bei 100 °C ab, wäscht mit heißem Nitrobenzol und mit Methanol und Wasser und erhält nach dem Trocknen 20,2 g (89 % der Theorie) des mit dem aus Beispiel 2a identischen gelbroten Pigmentes.

c) Gelbrote Anthrachinon-Pigmente erhält man bei Einsatz von 1-Amino-anthrachinon nach den in Beispiel 2a oder 2b beschriebenen Verfahren unter Verwendung von 4-Hydroxy-naphthalimiden der Formel (VII) :

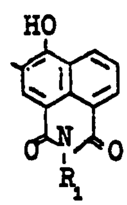

(VII)

$R_1$ = H, $C_2H_5$, $C_4H_9$, $-CH_2-CH_2-OH$, $-CH_2-CH_2-OCH_3$,

$-(CH_2)_{11}-CH_3$, 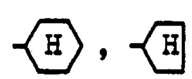 , $-CH_2-CH_2-CH_2-S-CH_3$,

$-CH_2-CH_2-N(CH_3)_2$, 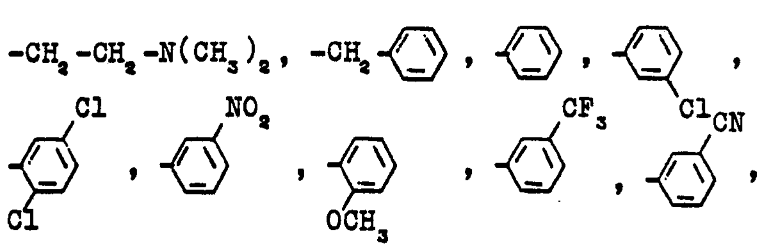

(Fortsetzung)

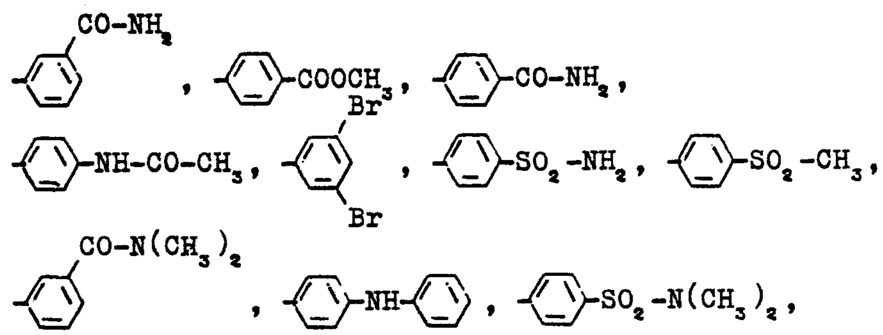

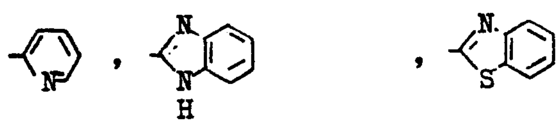

, -NH-$CH_3$,

-N$(CH_3)_2$,

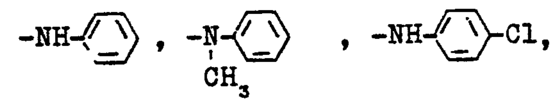

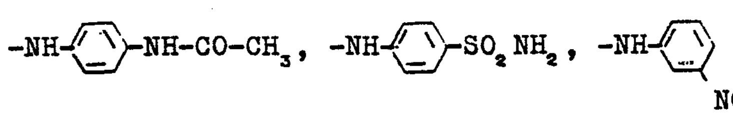

, -N$(C_6H_5)_2$

Pigmente mit ausgezeichneten Eigenschaften und ähnlichen Farbtönen erhält man, wenn man in den Beispielen 2a oder 2b anstelle des dort verwandten 1-Amino-anthrachinons folgende 1-Amino-anthrachinon-Derivate einsetzt: 1-Amino-4-chlor-anthrachinon, 1-Amino-5-chlor-anthrachinon, 1-Amino-6(7)-chlor-anthrachinon, 1-Amino-6,7-dichlor-anthrachinon, 1-Amino-2-,4-dibrom-anthrachinon, 1-Amino-6-fluor-anthrachinon, 1-Amino-4-nitro-anthrachinon, 1-Amino-5-nitro-anthrachinon, 1-Amino-anthrachinon-2-carbonsäureamid, 1-Amino-2-acetyl-anthrachinon.

Beispiel 3

8,5 g 87 %iges 1-Amino-5-benzolamino-anthrachinon, 3 g Orthoameisensäuretrimethylester werden in 75 g Nitrobenzol etwa 2-3 Stunden auf 140-150 °C erhitz, wobei man das entstehende Methanol über eine kurze Brücke abdestilliert. Nach Verschwinden des Ausgangsmaterials trägt man 6,5 g 4-Hydroxy-N-methylnaphthalimid ein und erhitzt weitere 4 Stunden auf 145-150 °C. Nach Abkühlen auf 100 °C saugt man das in gelbbraunen Prismen kristallisierte Pigment ab, wäscht mit heißem Nitrobenzol und Methanol und erhält nach dem Trocknen bei 100 °C 11,9 g (95 % der Theorie) des rotbraunen Pigmentes der Formel

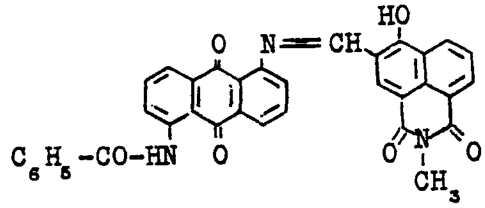

(XVI)

| | | | |
|---|---|---|---|
| Berechnet : | C 70,47 | H 3,63 | N 7,25 |
| Gefunden : | C 70,59 | H 3,60 | N 7,20 |

Mit ähnlichen Ausbeuten erhält man das Pigment, wenn man anstelle des Nitrobenzols folgende Lösungsmittel verwendet: o-Dichlorbenzol, 1.2.4-Trichlorbenzol, Diethylenglykolmonoethylether, Diethylenglykoldimethylether, Dimethylformamid, N-Methylpyrrolidon, Dimethylsulfoxid und Tetramethylensulfon.

Beispiel 4

11,8 g 1-Amino-4-hydroxy-anthrachinon, 8,5 g Orthoameisensäuretriethylester und 120 g Nitrobenzol

werden etwa 3 Stunden bei 140-145 °C gerührt, wobei man das entstehende Ethanol über eine Brücke abdestilliert. Nach Verschwinden des Ausgangsmaterials trägt man 7,6 g 4-Hydroxy-N-methylnaphthalimid ein und erhitzt weitere 4 Stunden auf 140-150 °C. Nach Abkühlen auf 100 °C saugt man das in schönen dunkelroten Nadeln kristallisierte Pigment ab, wäscht mit heißem Nitrobenzol und Methanol und erhält nach dem Trocknen bei 100 °C 21,4 g (91 % der Theorie) des violettbraunen Pigmentes der Formel

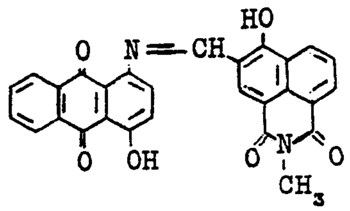

(XVII)

Berechnet : C 70,59 H 3,36 N 5,88
Gefunden : C 70,42 H 3,40 N 5,95

Beispiel 5

5,5 g 1.5-Diamino-anthrachinon, 8,8 g Orthoameisensäuretriethylester werden in 80 g Nitrobenzol etwa 3 Stunden auf 145-150 °C erhitzt, wobei man das entstehende Ethanol über eine Brücke abdestilliert und das Verschwinden des Ausgangsmaterials dünnschichtchromatographisch verfolgt. Man versetzt nun mit 10,6 g 4-Hydroxy-N-methylnaphthalimid und erhitzt so lange auf 140-150 °C, bis die Pigmentbildung beendet ist, was etwa 4 Stunden erfordert. Man saugt darauf das in gelbbraunen Prismen kristallisierte Pigment bei 120 °C ab, wäscht mit heißem Nitrobenzol und Methanol und erhält nach dem Trocknen bei 100 °C 15,4 g (93,8 % der Theorie) des schwarzbraunen Pigmentes der Formel

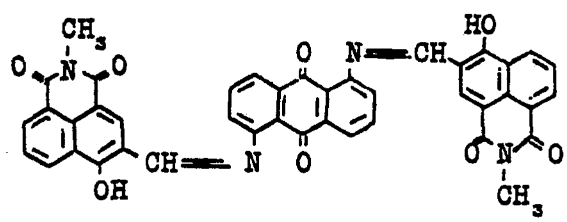

(XVIII)

Berechnet : C 70,99 H 3,38 N 7,89
Gefunden : C 70,85 H 3,50 N 7,96

Verwendet man anstelle des oben genannten 1.5-Diamino-anthrachinons in Beispiel 5 5,5 g 1.8-Diamino-anthrachinon, so erhält man 14,8 g (90,2 % der Theorie) des schwarzbraunen Pigmentes der Formel

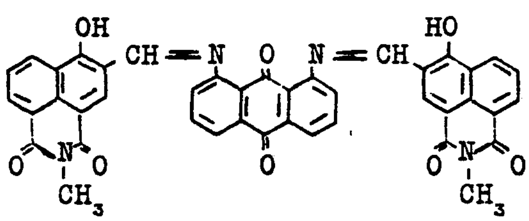

(XIX)

Berechnet : C 70,99 H 3,38 N 7,89
Gefunden : C 70,89 H 3,42 N 7,86

Setzt man anstelle des oben genannten 1.5-Diamino-anthrachinons in Beispiel 5 5,5 g 1.4-Diamino-anthrachinon ein, so erhält man 15,6 g (95,1 % der Theorie) des dunkelbraunen Pigmentes der Formel

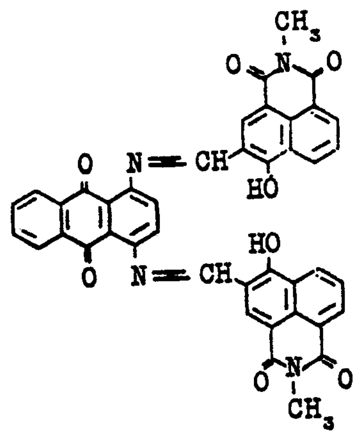

(XX)

Berechnet : C 70,99 H 3,38 N 7,89
Gefunden : C 71,11 H 3,47 N 7,82

Beispiel 6

5 g 1.5-Diamino-4.8-dihydroxy-anthrachinon, 4,4 g Orthoameisensäuretrimethylester werden in 75 g Nitrobenzol etwa 3 Stunden auf 145-150 °C erhitzt, wobei man das entstehende Methanol über eine Brücke abdestilliert und das Verschwinden des Ausgangsmaterials dünnschichtchromatographisch verfolgt. Man versetzt nun mit 9,6 g 4-Hydroxy-N-(2-hydroxyethyl)-naphthalimid und erhitzt so lange auf 160-170 °C, bis die Pigmentbildung beendet ist. Man saugt darauf das in schwarzen Nadeln kristallisierte Pigment bei 120 °C ab, wäscht mit heißem Nitrobenzol und Methanol und erhält nach dem Trocknen bei 100 °C 13,9 g (93,4 % der Theorie) des blauschwarzen Pigmentes der Formel

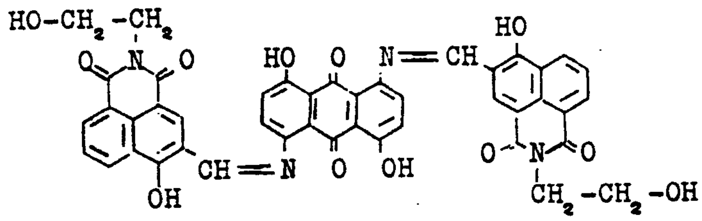

(XXI)

Berechnet : N 6,97
Gefunden : N 6,89

Verwendet man in Beispiel 6 anstelle des 1.5-Diamino-4.8-dihydroxy-anthrachinons 5 g 1.8-Diamino-4.5-dihydroxy-anthrachinon, so erhält man 14,1 g (94,7 % der Theorie) des blauschwarzen Pigmentes der Formel

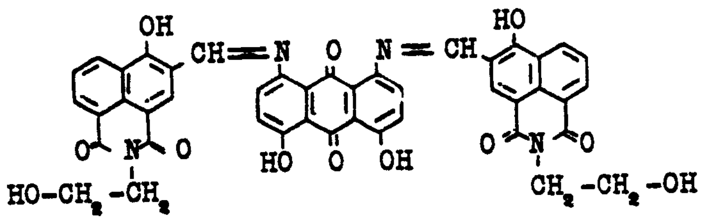

(XXII)

Berechnet : N 6,97
Gefunden : N 7,05

Pigmente mit ausgezeichneten Eigenschaften und ähnlichen Farbtönen erhält man, wenn man in Beispiel 6 anstelle des dort verwandten 1.5-Diamino-4.8-dihydroxy-anthrachinons das 1.5-Diamino-4.8-dihydroxy-x-brom-anthrachinon oder das 1.8-Diamino-4.8-dihydroxy-x-brom-anthrachinon einsetzt.

Beispiel 7

3,4 g 1.4.5.8-Yetraamino-anthrachinon, 9 g Orthoameisensäuretriethylester und 125 g Nitrobenzol

werden 3-4 Stunden auf 145-150 °C erhitzt, wobei man das entstehende Ethanol über eine Brücke abdestilliert und das Verschwinden des Ausgangsmaterials dünnschichtchromatographisch verfolgt. Man versetzt nun mit 12,3 g 4-Hydroxy-N-ethylnaphthalimid und erhitzt so lange auf 175-180 °C, bis die Bildung des Pigmentes in schwarzen Prismen beendet ist. Man saugt darauf das Pigment bei 120 °C ab, wäscht mit heißem Nitrobenzol und Methanol und erhält nach dem Trocknen bei 100 °C 14,1 g (91,1 % der Theorie) des blauschwarzen Pigmentes der Formel

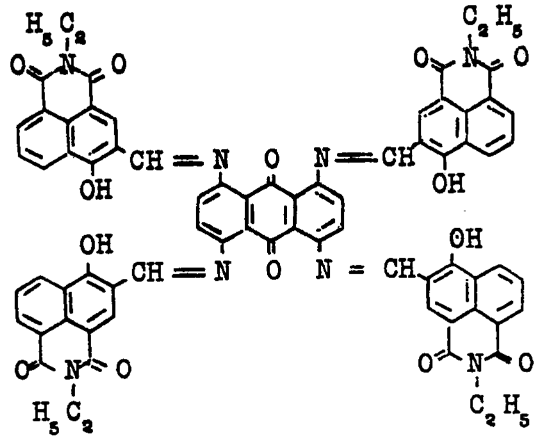

(XXIII)

Berechnet : N 9,18
Gefunden : N 9,29

Beispiel 8

13,4 g 1-Amino-4.5.8-trihydroxy-anthrachinon, 8,8 g Orthoameisensäuretriethylester und 80 g Nitrobenzol werden etwa 3 Stunden auf 145-150 °C erhitzt, wobei man das entstehende Ethanol über eine Brücke abdestilliert und das Verschwinden des Ausgangsmaterials dünnschichtchromatographisch verfolgt. Man versetzt nun mit 16 g 4-Hydroxy-(N-4-chlorphenyl)-naphthalimid und erhitzt so lange auf 155-160 °C, bis die Bildung des Pigmentes beendet ist. Nach dem Abkühlen auf 110 °C saugt man das in gelbbraunen Prismen kristallisierte Pigment ab, wäscht mit heißem Nitrobenzol und Methanol und erhält nach dem Trocknen bei 100 °C 26 g (87 % der Theorie) des braunen Pigmentes der Formel

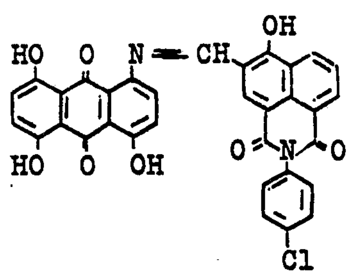

(XXIV)

Berechnet : N 4,63 Cl 5,87
Gefunden : N 4,71 Cl 5,81

Verwendet man in Beispiel 8 anstelle von 1-Amino-4.5.8-trihydroxy-anthrachinon äquivalente Mengen der in Tabelle 1 aufgeführten Amino-anthrachinone, so werden entsprechende Pigmente in den dort angegebenen Farbtönen erhalten

Tabelle 1

| Beispiel | Amino-anthrachinon | Farbton des erhaltenen Pigmentes |
|---|---|---|
| 9 | 1-Amino-4,8-dihydroxy-anthrachinon | Braun |
| 10 | 1-Amino-2-brom-4-hydroxy-anthrachinon | Gelbbraun |
| 11 | 1-Amino-4-anilino-anthrachinon | Schwarz |

Beispiel 12

5,5 g 97 %iges 1-Amino-anthrachinon, 3 g Orthoameisensäuretrimethylester und 60 g Nitrobenzol werden etwa 3 Stunden auf 145-150 °C erhitzt, wobei man das entstehende Methanol über eine Brücke abdestilliert und das Verschwinden des Ausgangsmaterials dünnschichtchromatographisch verfolgt. Man versetzt nun mit 5,1 g 4-Hydroxy-naphthalimid und erhitzt so lange auf 145-150 °C, bis die Bildung des Pigmentes beendet ist. Nach dem Abkühlen saugt man das in rotbraunen Prismen kristallisierte Produkt ab, wäscht mit Nitrobenzol und Methanol und erhält nach dem Trocknen 10,3 g (96,5 % der Theorie) des rotbraunen Pigmentes der Formel

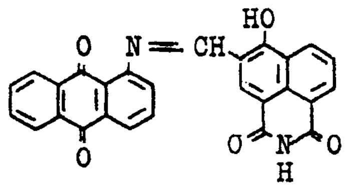

(XXV)

Berechnet : N 6,28
Gefunden : N 6,33

Verwendet man anstelle des oben genannten 1-Amino-anthrachinons 8,5 g 1-Amino-4-benzoylamino-anthrachinon, so erhält man 13,2 g des in schönen dunkelbraunen Nadeln kristallisierten Pigmentes der Formel

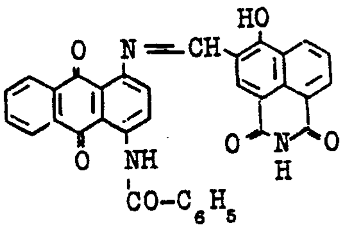

(XXVI)

Berechnet : N 7,43
Gefunden : N 7,52

Setzt man 5 g 1.5-Diamino-anthrachinon in 75 g Nitrobenzol mit 5 g Orthoameisensäuretrimethylester und nachfolgend mit 10,2 g 4-Hydroxy-N-(methylamino)-naphthalimid gemäß Beispiel 12 µm, so erhält man 15,2 g (97,5 % der Theorie) des in rotbraunen Prismen kristallisierten Pigmentes der Formel

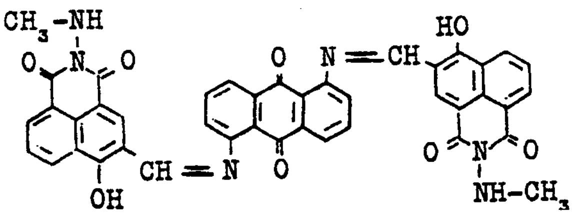

(XXVII)

Berechnet : N 11,32
Gefunden : N 11,21

Beispiel 13

11 g 1-Amino-anthrachinon, 5,8 g Orthoameisensäuretrimethylester und 75 g Nitrobenzol werden etwa 3 Stunden auf 145-150 °C erhitzt, wobei man das entstehende Methanol über eine Brücke abdestilliert. Nach Verschwinden des Ausgangsmaterials versetzt man mit 16,2 g 4-Hydroxy-N-(4-chlorphenylamino)-naphthalimid und erhitz so lange auf 145-150 °C, bis die Bildung des Farbstoffes beendet ist. Nach dem Abkühlen saugt man den in rotbraunen Nadeln kristallisierten Farbstoff ab, wäscht mit Nitrobenzol und Methanol und erhält nach dem Trocknen 25,1 g (91,8 % der Theorie) des rotbraunen Pigmentes der Formel

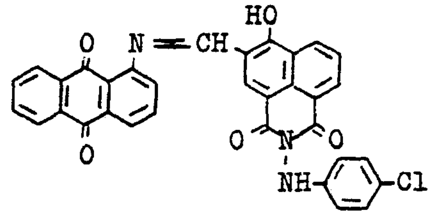

(XXVIII)

Berechnet : N 7,35 Cl 6,21
Gefunden : N 7,42 Cl 6,32

Beispiel 14

12,6 g 5-Amino-1,9-isothiazolanthron, 5,8 g Orthoameisensäuretrimethylester und 75 g Nitrobenzol werden etwa 3 Stunden auf 145-150 °C erhitzt, wobei man das entshende Methanol über eine Brücke abdestilliert. Nach Verschwinden des Ausgangsmaterials versetzt man mit 15,2 g 4-Hydroxy-N-(phenylamino)-naphthalimid und erhitzt so lange auf 145-150 °C, bis die Bildung des Pigmentes beendet ist. Nach dem Abkühlen saugt man bei 100 °C das in gelbbraunen Prismen kristallisierte Pigment ab, wäscht mit Nitrobenzol und Methanol und erhält nach dem Trocknen 25,7 g (90,8 % der Theorie) des Pigmentes der Formel

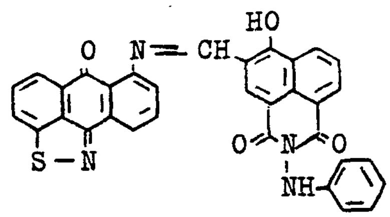

(XXIX)

Berechnet : N 9,89 S 5,65
Gefunden : N 9,78 S 5,56

Aehnliche gelbbraune Pigmente erhält man, ween man anstelle des oben genannten 5-Amino-1,9-isothiazolanthrons äquivalente Mengen 4-Amino- oder 5-Amino-1.9-pyrazolanthron einzetzt.

Beispiel 15

a) 8 g des nach Beispiel 1 erhaltenen feinverteilten Pigmentes werden mit einem Einbrennlack aus 25 g Kokosölalkydharz (40 % Kokosöl), 10 g Melaminharz, 50 g Toluol und 7 g Glykolmonomethylether auf einer automatischen Hoover-Muller-Anreibmaschine angereiben. Man trägt die Mischung auf die zu lackierende Unterlage auf, härtet den Lack durch Einbrennen bei 130 °C und erhält rotbraune Lackierungen sehr guter Ueberlackierechtheit und hervorragender Licht- und Wetterechtheit.

Pigmentierte Einbrennlacke gleicher Echtheiber erhält man, ween man 15-25 g des angegebenen Alkydharzes oder eines Alkydharzes auf Basis von Baumwollsaatöl, Ricinenöl, Ricinusöl oder synthetischen Fettsäuren verwendet und statt der angegebenen Melaminharzmenge 10-15 g des erwähnten Melaminharzes oder eines Kondensationsproduktes von Formaldehyd mit Harnstoff oder mit Benzoguanamin einsetzt.

b) Reibt man statt der angegebenen Pigmentmenge 1 bis 10 g einer Mischung von Titandioxid (Rutiltyp) mit dem in Beispiel 15a angegebenen Pigment im Verhältnis 0,5-50 : 1 in den im Beispiel 15a angegebenen Lack ein, erhält man bei gleicher Weiterverarbeitung Lackierungen gleicher Echtheiten und mit steigendem Titandioxidgehalt nach weiß verschobenem, rotbraunem Farbton.

Beispiel 16

In 100 g eines Nitrocelluloselackes, der aus 44 g Collodiumwolle (niedrigviskos, 35 %ig, butanolfeucht), 5 g Dibutylphthalat, 40 g Ethylacetat, 20 g Toluol, 4 g n-Butanol und 10 g Glykolmonomethylether besteht, werden 6 g feinverteiltes Pigment gemäß Beispiel 1 eingerieben. Nach Verstreichen und Trocknen erhält man rotbraune Lackierungen hervorragender Licht- und Ueberlackierechtheit. Zu gleichen Ergebnissen kommt man bei Verwendung von Nitrolacken mit 10-15 g Nitrocellulosegehalt, 5-10 g Weichmachergehalt und 70-85 g Lösungsmittelgemisch unter bevorzugter Verwendung von aliphatischen Estern wie Ethylacetat, Butylacetat und Aromaten wie Toluol und Xylol und kleineren Anteilen aliphatischer Ether wie Glykolether und Alkoholen wie Butanol. Unter Weichmachern können z.B. verstanden werden : Phthalsäureester wie Dioctylphthalat, Dibutylphthalat, Ester der Phosphorsäure,

Ricinusöl allein oder in Kombination mit ölmodifizierten Alkydharzen.

Lackierungen mit ähnlichen Echtheitseigenschaften erhält man bei Verwendung von anderen physikalisch trocknenden Sprit-, Zapon- und Nitrolacken, von lufttrocknenden Oel-, Kunstharz- und Nitrokombinationslacken, ofen- und lufttrocknenden Epoxidharzlacken, gegebenenfalls in Kombination mit Harnstoff-, Melamin-, Alkyd- oder Phenolharzen.

Beispiel 17

5 g in feine Verteilung gebrachtes Pigment gemäß Beispiel 1 werden in 100 g eines paraffinfrei trocknenden ungesättigten Polyesterharzes in einer Porzellankugelmühle angerieben. Mit der Anreibung werden 10 g Styrol, 59 g Melamin-Formaldehyd-Harz und 1 g einer Paste aus 40 % Cyclohexanonperoxid und 60 % Dibutylphthalat gut verrührt und schließlich 4 g Trocknerlösung (10 %iges Kobaltnaphthenat in Testbenzin) und 1 g Siliconöllösung (1 %ig in Xylol) beigemischt. Man trägt die Mischung auf grundiertes Holz auf und erhält eine hochglänzende, wasserfeste und wetterechte rotbraune Lackierung von hervorragender Lichtechtheit.

Verwendet man statt des Reaktionslackes auf Basis ungesättigter Polyesterharze aminhärtende Epoxidharzlacke mit Dipropylendiamin als Aminokomponente, erhält man rotbraune Lackierungen hervorragender Wetter- und Ausblühechtheit.

Beispiel 18

100 g einer 65 %igen Lösung eines aliphatischen Polyesters mit ca. 8 % freien Hydroxylgruppen in Glykolmonomethyletheracetat werden mit 5 g des nach Beispiel 1 erhaltenen Pigmentes angerieben und sodann mit 44 g einer 67 %igen Lösung des Umsetzungsproduktes von 1 Mol Trimethylolpropan mit 3 Mol Toluylen-diisocyanat gut vermischt. Ohne Beeinträchtigung der Topfzeit ergeben sich nach Auftragen des Gemisches und Reaktion der Komponenten hochglänzende rotbraune Polyurethanlackierungen hervorragender Ausblüh-, Licht- und Wetterechtheit.

Pigmentierungen ähnlicher Echtheit erhält man bei Anwendung anderer Zweikomponentenlacke auf Basis von aromatischen oder aliphatischen Isocyanaten und hydroxylgruppenhaltigen Polyethern oder Polyestern, sowie mit feuchtigkeitstrocknenden Polyharnstofflackierungen ergebenden Polyisocyanatlacken.

Beispiel 19

5 g eines Feinteiges, erhalten durch Kneten von 50 g des nach Beispiel 1 erhaltenen Pigmentes mit 15 g eines Arylpolyglykolether-Emulgators und 35 g Wasser werden mit 10 g Schwerspat als Füllstoff, 10 g Titandioxid (Rutiltyp) als Weißpigment und 40 g einer wäßrigen Dispersionsfarbe, enthaltend ca. 50 % Polyvinylacetat, gemischt. Man verstreicht die Farbe und erhält nach dem Trocknen rotbraune Anstriche sehr guter Kalk- und Zementechtheit sowie hervorragende Wetter- und Lichtechtheit.

Der durch Kneten erhaltene Feinteig eignet sich gleichermaßen zum Pigmentieren klarer Polyvinylacetat-Dispersionsfarben, für Dispersionsfarben, die Mischpolymerisate aus Styrol und Maleinsäuren als Bindemittel enthalten, sowie Dispersionsfarben auf Basis von Polyvinylpropionat, Polymethacrylat oder Butadienstyrol.

Beispiel 20

10 g des in Beispiel 19 erwähnten Pigment-Teiges werden mit einer Mischung aus 5 g Kreide und 5 g 20 %iger Leimlösung vermischt. Man erhält eine rotbraune Tapetenstreichfarbe, mit der man Ueberzüge hervorragender Lichtechtheit erzielt. Zur Herstellung des Pigment-Teiges können auch andere nichtionogene Emulgatoren wie die Umsetzungsprodukte von Nonylphenol mit Ethylenoxid oder ionogene Netzmittel, wie die Natriumsalze von Alkylarylsulfonsäuren, z.B. der Dinaphthylmethandisulfonsäure, Natriumsalze von substituierten Sulfonsäureestern und Natriumsalze von Paraffinsulfonsäuren in Kombination mit Alkylpolyglykolethern verwendet werden.

Beispiel 21

Eine Mischung aus 65 g Polyvinylchlorid, 35 g Diisooctylphthalat, 2 g Dibutylzinnmercaptid, 0,5 g Titandioxid und 0,5 g des Pigmentes von Beispiel 1 wird auf einem Mischwalzwerk bei 165 °C eingefärbt. Man erhält eine intensiv rotbraun gefärbte Masse, die zur Herstellung von Folien oder Formkörpern dienen kann. Die Färbung zeichnet sich durch hervorragende Licht- und sehr gute Weichmacherechtheit aus.

Beispiel 22

0,2 g Pigment nach Beispiel 1 werden mit 100 g Polyethylen-, Polypropylen- oder Polystyrolgranulat

gemischt. Die Mischung kann entweder bei 220 bis 280 °C direkt in einer Spritzgußmaschine verspritzt, oder in einer Strangpresse zu gefärbten Stäben bzw. auf dem Mischwalzwerk zu gefärbten Fellen verarbeitet werden. Die Stäbe bzw. Felle werden gegebenenfalls granuliert und in einer Spritzgußmaschine verspritzt.

Die rotbraunen Formlinge besitzen sehr gute Licht- und Migrationsechtheit. In ähnlicher Weise können bei 280-300 °C, gegebenenfalls unter Stickstoffatmosphäre, synthetische Polyamide aus Caprolactam oder Adipinsäure und Hexamethylendiamin oder die Kondensate aus Terephthalsäure und Ethylenglykol gefärbt werden.

Beispiel 23

1 g Pigment nach Beispiel 1, 10 g Titandioxid (Rutiltyp) und 100 g eines in Pulverform vorliegenden Mischpolymerisates auf Basis von Acrylnitril-Butadien-Styrol werden gemischt und auf einem Walzwerk bei 140-180 °C eingefärbt. Man erhält ein rotbraun gefärbtes Fell, das granuliert und in einer Spritzgußmaschine bei 200-250 °C verspritzt wird. Man erhält rotbraune Formlinge sehr guter Licht- und Migrationsechtheit sowie ausgezeichneter Hitzebeständigkeit.

Auf ähnliche Weise, jedoch bei Temperaturen von 180-220 °C und ohne Zusatz von Titandioxid werden Kunststoffe auf Basis von Celluloseacetat, Cellulosebutyrat und deren Gemische mit ähnlichen Echtheiten gefärbt.

Beispiel 24

0,2 g Pigment nach Beispiel 1 werden in feinverteilter Form mit 100 g eines Kunststoffes auf Polycarbonat-Basis in einem Extruder oder in einer Knetschnecke bei 250-280 °C gemischt und zu Granulat verarbeitet. Man erhält ein rotbraunes, transparentes Granulat hervorragender Lichtechtheit und Hitzebeständigkeit.

Beispiel 25

90 g eines schwach verzweigten Polypropylenglykols mit einem Molekulargewicht von 2 500 und einer Hydroxylzahl von 56, 0,25 g Endoethylenpiperazin, 0,3 g Zinn-(II)-octoat, 1,0 g eines Polyethersiloxans, 3,5 g Wasser, 12,0 g einer Anreibung von 10 g Pigment nach Beispiel 1 in 50 g des angegebenen Polypropylenglykols werden gut miteinander gemischt und anschließend mit 45 g Toluylendiisocyanat (80 % 2.4- und 20 % 2.6-Isomeres) innig gemischt und in eine Form gegossen. Die Mischung trübt sich nach 6 Sekunden und die Schaumstoffbildung erfolgt. Nach 70 Sekunden hat sich ein intensiv rotbraun gefärbter, weicher Polyurethanschaumstoff gebildet, dessen Pigmentierung hervorragende Lichtechtheit aufweist.

Beispiel 26

90 g eines schwach verzweigten Polyesters aus Adipinsäure, Diethylenglykol und Trimethylolpropan mit einem Molekulargewicht von 2 000 und einer Hydroxylzahl von 60 werden mit folgenden Komponenten vermischt: 1,2 g Dimethylbenzylamin, 2,5 g Natrium-Ricinusölsulfat, 2,0 g eines oxethylierten, benzylierten Oxidiphenyls, 1,75 g Wasser, 12 g einer Paste, hergestellt durch Anreiben von 10 g des Pigmentes nach Beispiel 1 in 50 g des oben angegebenen Polyesters. Nach der Mischung werden unter Rühren 40 g Toluylendiisocyanat (65 % 2.4- und 35 % 2.6-Isomeres) eingerührt und die Mischung in eine Form gegossen und verschäumt. Nach 60 Sekunden hat sich rotbraun gefärbter, weicher Polyurethanschaumstoff gebildet, dessen Einfärbung sich durch sehr gute Lichtechtheit auszeichnet.

Beispiel 27

Mit einer Druckfarbe, hergestellt durch Anreiben von 35 g Pigment nach Beispiel 1 und 65 g Leinöl Zugabe von 1 g Siccativ (Co-Naphthenat, 50 %ig in Testbenzin) werden rotbraune Offset-Drucke hoher Farbstärke und sehr guter Licht- und Lackierechtheit erhalten. Verwendung dieser Druckfarben in Buch-, Licht-, Stein oder Stahlstichdruck führt zu rotbraunen Drucken ähnlicher Echtheiten. Verwendet man das Pigment zur Färbung von Blechdruck- oder niedrigviskosen Tiefdruckfarben oder Drucktinten, erhält man rotbraune Drucke ähnlicher Echtheiten.

Beispiel 28

Aus 10 g des in Beispiel 19 angegebenen Pigment-Feinteiges, 100 g Traganth, 3 %ig, 100 g einer wäßrigen 50 %igen Eialbuminlösung und 25 g eines nichtionogenen Netzmittels wird eine Druckpaste bereitet. Man bedruckt ein Textilfasergewebe, dämpft bei 100 °C und erhält einen rotbraunen Druck, der sich durch vorzügliche Echtheiten, insbesondere Lichtechtheiten auszeichnet. Im Druckansatz können anstelle des Traganths und Eialbumins weitere, für das Fixieren auf der Faser verwendbare Bindemittel, beispielsweise solche auf Kunstharzbasis, Britishgum oder Celluloseglykolat verwendet werden.

Beispiel 29

Eine Mischung aus 100 g Crepe hell, 2,6 g Schwefel, 1 g Stearinsäure, 1 g Mercaptobenzthiazol, 0,2 g Hexamethylentetramin, 5 g Zinkoxid, 60 g Kreide und 2 g Titandioxid (Anatastyp) wird auf einem Mischwalzwerk bei 50 °C und mit 2 g des nach Beispiel 1 erhaltenen Pigmentes eingefärbt und dann 12 Minuten bei 140 °C vulkanisiert. Man erhält ein rotbraun gefärbtes Vulkanisat sehr guter Lichtechtheit.

Beispiel 30

100 g einer 20 %igen wäßrigen Paste des Pigmentes nach Beispiel 1, beispielsweise hergestellt durch Auflösen des Farbstoffes in 96 %iger Schwefelsäure, Austragen auf Eis, Filtrieren und Neutralwaschen mit Wasser, werden 22,5 l einer wäßrigen, ungefähr 9 %igen Viskoselösung im Rührwerk zugesetzt. Die gefärbte Masse wird 15 Minuten gerührt, anschließend entlüftet und einem Spinn- und Entschwefelungsprozeß unterworfen. Man erhält rotbraune Fäden oder Folien mit sehr guter Lichtechtheit.

Beispiel 31

10 kg einer Papiermasse, enthaltend auf 100 g 4 g Cellulose, werden im Holländer während etwa 2 Stunden behandelt. Während dieser Zeit gibt man in je viertelstündigen Abständen 4 g Harzleim, dann 30 g einer etwa 15 %igen Pigmentdispersion, erhalten durch Mahlen von 4,8 g des nach Beispiel 1 erhaltenen Pigmentes mit 4,8 g Dinaphthylmethandisulfonsäure und 22 g Wasser in der Kugelmühle, sodann 5 g Aluminiumsulfat zu. Nach Fertigstellung auf der Papiermaschine erhält man ein rotbraun gefärbtes Papier von hervorragender Lichtechtheit.

Beispiel 32

Das nach Beispiel 31 hergestellte rotbraun pigmentierte Papier wird mit der 55 %igen Lösung eines Harnstoff-Formaldehyd-Harzes in n-Butanol getränkt und bei 140 °C eingebrannt. Man erhält ein rotbraunes Laminatpapier von sehr guter Migrations- und hervorragender Lichtechtheit.

Ein Laminatpapier gleicher Echtheit erhält man durch Laminieren eines Papieres, das im Tiefdruckverfahren mit einer Druckfarbe bedruckt wurde, die den in Beispiel 19 angegebenen, rotbraunen Pigmentfeinteig und wasserlösliche bzw. verseifbare Bindemittel enthält.

Beispiel 33

20 g des gemäß Beispiel 1 erhaltenen Pigmentes werden in 50 g Dimethylformamid unter Verwendung eines Dispergierhilfsmittels, bestehend aus 50 g einer 10 %igen Lösung von Polyacrylnitril in Dimethylformamid, in einer Perlmühle fein dispergiert. Das so erhaltene Pigmentkonzentrat wird in bekannter Weise zu einer Spinnlösung von Polyacrylnitril gegeben, homogenisiert und dann zu Filamenten nach bekannten Trocken- oder Naß-Spinnverfahren versponnen.

Man erhält rotbraun gefärbte Filamente, deren Färbungen sich durch sehr gute Reib-, Wasch-, Migrations-, Hitze-, Licht- und Wetterechtheit auszeichnen.

**Ansprüche**

1. Anthrachinon-Azomethin- Verbindungen der Formel

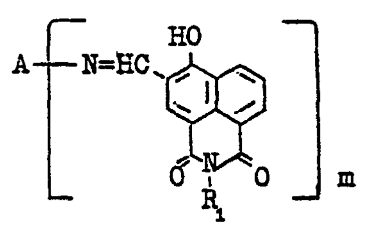

(I)

oder der tautomeren Formel

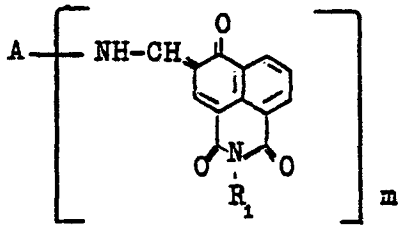

(Ia)

in denen

A einen Sulfonsäuregruppen-freien, gegebenenfalls weitersubstituierten Anthrachinonrest, der vorzugsweise aus höchstens 5 kondensierten Ringen besteht,

$R_1$ Wasserstoff, gegebenenfalls substituiertes Aryl, vorzugsweise

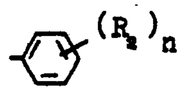

(II)

Heteroaryl, Cycloalkyl oder $C_1$-$C_{12}$-Alkyl wobei die Alkylkette durch Sauerstoff oder Schwefel unterbrochen und/oder durch Hydroxyl- oder $N(R_3)_2$-Gruppen substituiert sein kann, $-N(R_3)_2$ oder

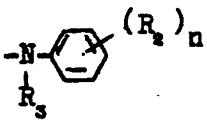

$R_2$ einen Substituenten

$R_3$ Wasserstoff, $C_1$-$C_4$-Alkyl, Cycloalkyl, gegebenenfalls substituiertes Aryl,

m 1, 2, 3 oder 4 und

n 0, 1, 2, 3, 4 oder 5 bedeuten.

2. Anthrachinon-Azomethin-Verbindungen, die in einer ihrer tautomeren Strukturen der Formel

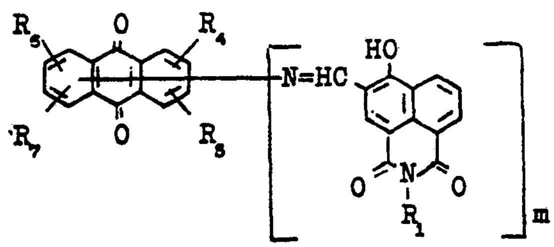

(IV)

entsprechen,

worin

$R_1$ und m die oben angegebene Bedeutung haben und

$R_4$ Wasserstoff, Halogen wie Fluor, Chlor und Brom, Nitro, $C_1$-$C_4$-Alkyl, $C_1$-$C_4$-Alkoxy, $C_1$-$C_4$-Alkylamino, Benzylamino, Cyclohexylamino, $C_1$-$C_4$-Alkylmercapto, gegebenenfalls durch $C_1$-$C_4$-Alkyl, $C_1$-$C_4$-Alkoxy, Fluor, Chlor, Brom oder Nitro substituiertes Phenylmercapto, $C_1$-$C_4$-Alkylcarbonyl, $C_1$-$C_4$-Alkoxycarbonyl, gegebenenfalls durch $C_1$-$C_4$-Alkyl, $C_1$-$C_4$-Alkoxy, Chlor oder Nitro substituiertes Phenylamino, gegebenenfalls durch $C_1$-$C_4$-Alkyl, Benzyl oder Phenyl mono- oder disubstituiertes Carbamoyl, wobei Phenyl durch $C_1$-$C_4$-Alkyl, $C_1$-$C_4$-Alkoxy, Fluor, Chlor, Brom oder Nitro substituiert sein kann, Carboxy, Hydroxy, $C_1$-$C_4$-Alkylcarbonylamino gegebenenfalls durch $C_1$-$C_4$-Alkyl, $C_1$-$C_4$-Alkoxy, Chlor, Brom oder Nitro substituiertes Benzoylamino oder gegebenenfalls $C_1$-$C_4$-Alkyl, $C_1$-$C_4$-Alkoxy, Fluor, Chlor, Brom oder Nitro substituiertes Benzolsulfonylamino,

$R_5$ Wasserstoff, Chlor, Hydroxy oder Methyl,

$R_6$ Wasserstoff, Halogen wie Fluor, Chlor oder Brom Nitro, $C_1$-$C_4$-Alkyl, $C_1$-$C_4$-Alkoxy, $C_1$-$C_4$-Alkylamino, $C_1$-$C_4$-Alkylmercapto, gegebenenfalls durch $C_1$-$C_4$-Alkyl, $C_1$-$C_4$-Alkoxy, Fluor, Chlor, Brom oder Nitro substituiertes Phenylmercapto, $C_1$-$C_4$-Alkoxycarbonyl, $C_1$-$C_4$-Alkylcarbonyl, Benzylamino, Cyclohexykalino, gegebenenfalls durch $C_1$-$C_4$-Alkyl, $C_1$-$C_4$-Alkoxy, Chlor, Brom oder Nitro substituiertes Phenylamino, Carboxy, Hydroxy, gegebenenfalls durch $C_1$-$C_4$-Alkyl, Benzyl oder Phenyl mono- oder disubstituiertes Carbamoyl, wobei Phenyl durch $C_1$-$C_4$-Alkyl, $C_1$-$C_4$-Alkoxy, Fluor, Chlor, Brom oder Nitro substituiert sein kann, $C_1$-$C_4$-Alkylcarbonylamino, gegebenenfalls durch $C_1$-$C_4$-Alkyl, $C_1$-$C_4$-Alkoxy, Chlor, Brom oder Nitro substituiertes Benzoylamino, $C_1$-$C_4$-Alkansulfonylamino oder gegebenenfalls durch $C_1$-$C_4$-Alkyl, $C_1$-$C_4$-Alkoxy, Fluor, Chlor, Brom oder Nitro substituiertes Benzolsulfonylamino und

$R_7$ Wasserstoff, Halogen wie Fluor, Chlor und Brom oder Hydroxy bedeuten.

3. Anthrachinon-Azomethin-Verbindungen, die in einer ihrer tautomeren Strukturen der Formel

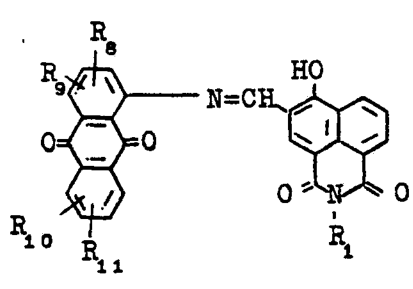

(V)

entsprechen,
worin

$R_1$ die oben angegebene Bedeutung hat und

$R_8$, $R_9$, $R_{10}$, $R_{11}$ Wasserstoff, Chlor, Brom, Carboxy, $C_1$-$C_4$-Alkoxycarbonyl, Carbamoyl, $C_1$-$C_4$-Alkylcarbonylamino, gegebenenfalls durch 1 oder 2 Nitro oder 1 bis 5 Chlor oder Brom substituiertes Benzoylamino, $C_1$-$C_4$-Alkansulfonylamino, oder gegebenenfalls durch Methyl, Methoxy oder Chlor substituiertes Benzolsulfonylamino oder einen Rest der Formel

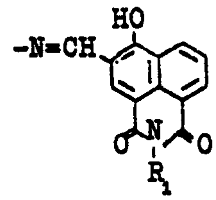

(VI)

bedeuten.

4. Verfahren zur Herstellung von Anthrachinon-Azomethin-Pigmenten, dadurch gekennzeichnet, daß man Amino-anthrachinone der Formel

$$A—(—NH_2)_m \quad (III)$$

in der

A und m die in Anspruch 1 genannte Bedeutung besitzen, mit 3-Alkoxymethylen-4-hydroxy-naphthalimiden der Formel

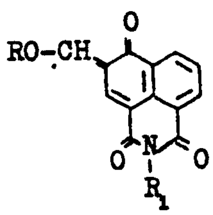

(IX)

in der

R vorzugsweise für eine $C_1$-$C_4$-Alkylgruppe steht und

$R_1$ die in Anspruch 1 genannte Bedeutung besitzt, in einem organischen Reaktionsmedium bei 100-220 °C, vorzugsweise 120-180 °C kondensiert.

5. Verfahren zur Herstellung von Anthrachinon-Azomethin-Pigmenten, dadurch gekennzeichnet, daß man Formiminoester von Amino-anthrachinonen der Formel

$$A—(—N = CH - OR)_m \quad (X)$$

in der

A und m die in Anspruch 1 genannte Bedeutung besitzen und

R vorzugsweise für eine $C_1$-$C_4$-Alkylgruppe steht, mit 4-Hydroxy-naphthalimiden der Formel

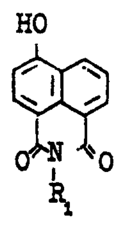

(VII)

in der

$R_1$ die in Anspruch 1 genannte Bedeutung besitzt, in einem organischen Reaktionsmedium bei 100-220 °C, vorzugsweise 120-180 °C, kondensiert.

6. Verfahren zur Herstellung von Anthrachinon-Azomethin-Verbindungen, dadurch gekennzeichnet, daß man Formamidinium-halogenide der Formel

$$A—[—NH - CH=\overset{\oplus}{N}(R)_2]_m\, X^{\ominus}{}_m \quad (XI)$$

in der

A und m die in Anspruch 1 genannte Bedeutung besitzen,

R vorzugsweise für eine $C_1$-$C_4$-Alkylgruppe und

X für Chlor oder Brom stehen, mit 4-Hydroxy-naphthalinimiden der Formel

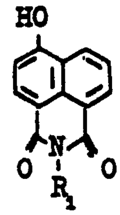

(VII)

in der

$R_1$ die in Anspruch 1 genannte Bedeutung besitzt, in einem organischen Reaktionsmedium bei 100-220 °C, vorzugsweise 120-180 °C, kondensiert.

7. Verfahren zum Pigmentieren organischer makromolekularer Stoffe, dadurch gekennzeichnet, daß man Anthrachinon-Pigmente gemäß den Ansprüchen 1-3 verwendet.

8. Mit den Anthrachinon-Verbindungen gemäß den Ansprüchen 1-3 pigmentierte organische makromolekulare Stoffe.

**Claims**

1. Anthraquinone-azomethine compounds of the formula

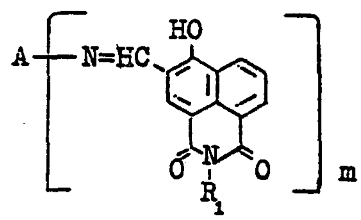

(I)

or the tautomeric formula

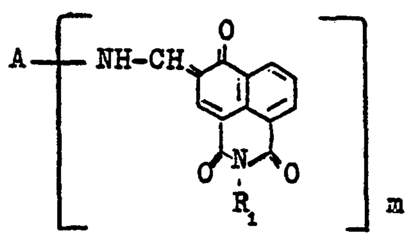

(Ia)

in which

A denotes an anthraquinone radical which is free from sulphonic acid groups and is optionally further substituted and which preferably consists of at most 5 fused rings,

$R_1$ denotes hydrogen, optionally substituted aryl, preferably

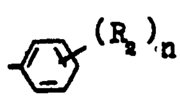

(II)

hetero-aryl, cycloalkyl or $C_1$-$C_{12}$-alkyl, it being possible for the alkyl chain to be interrupted by oxygen or sulphur and/or to be substituted by hydroxyl groups or $N(R_3)_2$ groups, $-N(R_3)_2$ or

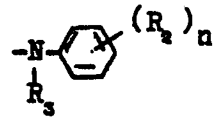

$R_2$ denotes a substituent,
$R_3$ denotes hydrogen, $C_1$-$C_4$-alkyl, cycloalkyl or optionally substituted aryl,
m denotes 1, 2, 3 or 4, and
n denotes 0, 1, 2, 3, 4 or 5.

2. Anthraquinone-azomethine compounds which, in one of their tautomeric structures, correspond to the formula

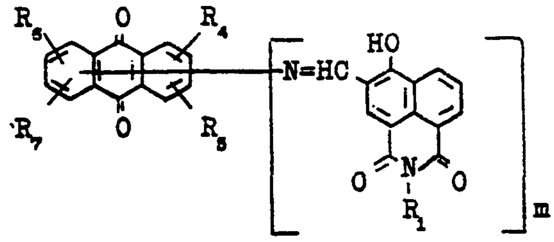

(IV)

wherein

$R_1$ and m have the meaning indicated above and $R_4$ denotes hydrogen, halogen, such as fluorine, chlorine and bromine, nitro, $C_1$-$C_4$-alkyl, $C_1$-$C_4$-alkoxy, $C_1$-$C_4$-alkylamino, benzylamino, cyclohexylamino, $C_1$-$C_4$-alkylmercapto, phenylmercapto which is optionally substituted by $C_1$-$C_4$-alkyl, $C_1$-$C_4$-alkoxy, fluorine, chlorine, bromine or nitro, $C_1$-$C_4$-alkylcarbonyl, $C_1$-$C_4$-alkoxycarbonyl, phenylamino which is optionally substituted by $C_1$-$C_4$-alkyl, $C_1$-$C_4$-alkoxy, chlorine or nitro, carbamoyl which is optionally monosubstituted or disubstituted by $C_1$-$C_4$-alkyl, benzyl or phenyl, it being possible for phenyl to be substituted by $C_1$-$C_4$-alkyl, $C_1$-$C_4$-alkoxy, fluorine, chlorine, bromine or nitro, carboxyl, hydroxyl, $C_1$-$C_4$-alkylcarbonylamino, benzoylamino which is optionally substituted by $C_1$-$C_4$-alkyl, $C_1$-$C_4$-alkoxy, chlorine, bromine or nitro, or benzenesulphonylamino which is optionally substituted by $C_1$-$C_4$-alkyl, $C_1$-$C_4$-alkoxy, fluorine, chlorine, bromine or nitro,

$R_5$ denotes hydrogen, chlorine, hydroxyl or methyl, $R_6$ denotes hydrogen, halogen, such as fluorine, chlorine or bromine, nitro, $C_1$-$C_4$-alkyl, $C_1$-$C_4$-alkoxy, $C_1$-$C_4$-alkylamino, $C_1$-$C_4$-alkylmercapto, phenylmercapto which is optionally substituted by $C_1$-$C_4$-alkyl, $C_1$-$C_4$-alkoxy, fluorine, chlorine, bromine or nitro, $C_1$-$C_4$-alkoxycarbonyl, $C_1$-$C_4$-alkylcarbonyl, benzylamino, cyclohexylamino, phenylamino which is optionally substituted by $C_1$-$C_4$-alkyl, $C_1$-$C_4$-alkoxy, chlorine, bromine or nitro, carboxyl, hydroxyl, carbamoyl which is optionally monosubstituted or disubstituted by $C_1$-$C_4$-alkyl, benzyl or phenyl, it being possible for phenyl to be substituted by $C_1$-$C_4$-alkyl, $C_1$-$C_4$-alkoxy, fluorine, chlorine, bromine or nitro, $C_1$-$C_4$-alkylcarbonylamino, benzoylamino which is optionally substituted by $C_1$-$C_4$-alkyl, $C_1$-$C_4$-alkoxy, chlorine, bromine or nitro, $C_1$-$C_4$-alkanesulphonylamino or benzenesulphonylamino which is optionally substituted by $C_1$-$C_4$-alkyl, $C_1$-$C_4$-alkoxy, fluorine, chlorine, bromine or nitro and

$R_7$ denotes hydrogen, halogen, such as fluorine, chlorine and bromine, or hydroxyl.

3. Anthraquinone-azomethine compounds which, in one of their tautomeric structures, correspond to the formula

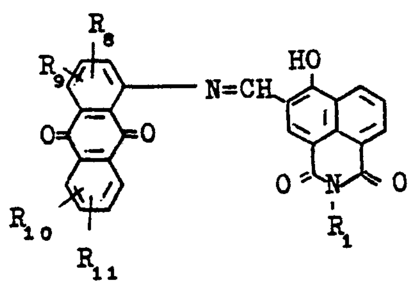

(V)

wherein

$R_1$ has the meaning indicated above and $R_8$, $R_9$, $R_{10}$ and $R_{11}$ denote hydrogen, chlorine, bromine, carboxyl, $C_1$-$C_4$-alkoxycarbonyl, carbamoyl, $C_1$-$C_4$-alkylcarbonylamino, benzoylamino which is optionally substituted by 1 or 2 nitro groups or 1 to 5 chlorine or bromine atoms, $C_1$-$C_4$-alkanesulphonylamino, or benzene-sulphonylamino which is optionally substituted by methyl, methoxy or chlorine, or a radical of the formula

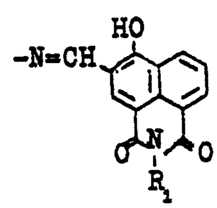

(VI)

4. Process for the preparation of anthraquinone-azomethine pigments, characterised in that amino-anthraquinones of the formula

$$A{-}({-}NH_2)_m \qquad (III)$$

in which

A and m have the meaning given in Claim 1, are subjected to a condensation reaction with 3-alkoxymethylene-4-hydroxy-naphthalimides of the formula

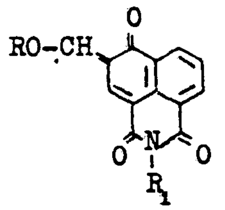

(IX)

in which

R preferably represents a $C_1$-$C_4$-alkyl group and

$R_1$ has the meaning given in Claim 1,

at 100-220 °C, preferably 120-180 °C, in an organic reaction medium.

5. Process for the preparation of anthraquinone-azomethine pigments, characterised in that formimino-esters of amino-anthraquinones of the formula

$$A{-}({-}N{=}CH{-}OR)_m \qquad (X)$$

in which

A and m have the meaning given in Claim 1 and

R preferably represents a $C_1$-$C_4$-alkyl group, are subjected to a condensation reaction with 4-hydroxy-naphthalimides of the formula

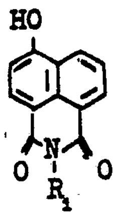

(VII)

in which

$R_1$ has the meaning given in Claim 1, at 100-220 °C, preferably 120-180 °C, in an organic reaction medium.

6. Process for the preparation of anthraquinone-azomethine compounds, characterised in that formamidinium halides of the formula

$$A{-}[{-}NH-CH{=}\overset{\oplus}{N}(R)_2]_m\,X^{\ominus}{}_m \qquad (XI)$$

A and m have the meaning given in Claim 1,

R preferably represents a $C_1$-$C_4$-alkyl group and

X represents chlorine or bromine,

are subjected to a condensation reaction with 4-hydroxy-naphthalimides of the formula

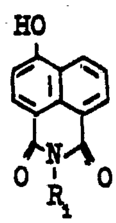

(VII)

in which

$R_1$ has the meaning given in Claim 1, at 100-220 °C, preferably 120-180 °C, in an organic reaction medium.

7. Process for pigmenting organic macromolecular substances, characterised in that anthraquinone pigments according to Claims 1-3 are used.

8. Organic macromolecular substances pigmented with the anthraquinone compounds according to Claims 1-3.

**Revendications**

1. Composés azométhiniques d'anthraquinone de formule :

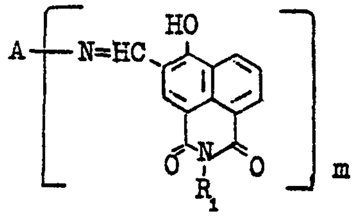

(I)

ou de la formule tautomère

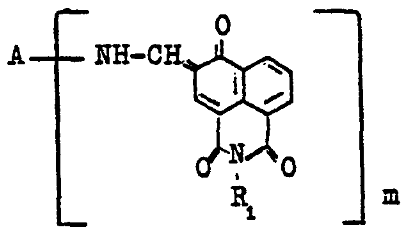

(Ia)

formules dans lesquelles

A est un reste d'anthraquinone dépourvu de groupes acide sulfonique, portant éventuellement d'autres substituants, qui est de préférence formé de noyaux condensés au nombre de cinq au maximum

$R_1$ est l'hydrogène, un groupe aryle éventuellement substitué, de préférence

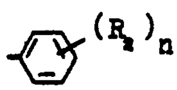

(II)

un groupe hétéroaryle, cycloalkyle ou alkyle en $C_1$ à $C_{12}$, dont la chaîne alkyle peut être interrompue par de l'oxygène ou du soufre et/ou substituée par des groupes hydroxyle ou $N(R_3)_2$, un groupe $-N(R_3)_2$ ou

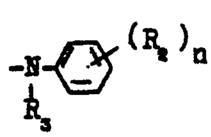

$R_2$ est un substituant,

$R_3$ est l'hydrogène, un groupe alkyle en $C_1$ à $C_4$, cycloalkyle, aryle éventuellement substitué,

m est égal à 1, 2, 3 ou 4 et

n est égal à 0, 1, 2, 3, 4 ou 5.

2. Composés azométhiniques d'anthraquinone qui, sous l'une de leurs formes tautomères, répondent à la formule :

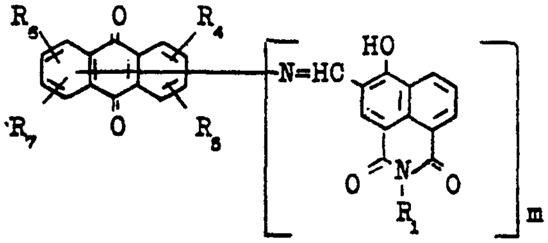

(IV)

dans laquelle

$R_1$ et m ont la définition indiquée ci-dessus et

$R_4$ est l'hydrogène, un halogène tel que le fluor, le chlore et le brome, un groupe nitro, alkyle en $C_1$ à $C_4$, alkoxy en $C_1$ à $C_4$, alkylamino en $C_1$ à $C_4$, benzylamino, cyclohexylamino, alkylmercapto en $C_1$ à $C_4$, phénylmercapto éventuellement substitué par un radical alkyle en $C_1$ à $C_4$, alkoxy en $C_1$ à $C_4$, du fluor, du chlore, du brome ou un radical nitro, un groupe (alkyle en $C_1$ à $C_4$)-carbonyle, (alkoxy en $C_1$ à $C_4$)-carbonyle, phénylamino éventuellement substitué par un radical alkyle en $C_1$ à $C_4$, alkoxy en $C_1$ à $C_4$, du chlore ou un radical nitro, un groupe carbamoyle éventuellement mono- ou disubstitué par un radical alkyle en $C_1$ à $C_4$, benzyle ou phényle, le radical phényle pouvant être substitué par un radical alkyle en $C_1$ à $C_4$, alkoxy en $C_1$ à $C_4$, du fluor, du chlore, du brome ou un radical nitro, un groupe carboxy, hydroxy (alkyle en $C_1$ à $C_4$)-carbonylamino, benzoylamino éventuellement substitué par un radical alkyle en $C_1$ à $C_4$, alkoxy en $C_1$ à $C_4$, du chlore, du brome ou un radical nitro, ou un groupe benzènesulfonylamino éventuellement substitué par un radical alkyle en $C_1$ à $C_4$, alkoxy en $C_1$ à $C_4$, du fluor, du chlore, du brome ou un radical nitro,

$R_5$ est l'hydrogène, le chlore, un groupe hydroxy ou un groupe méthyle,

$R_6$ est l'hydrogène, un halogène tel que fluor, chlore ou brome, un groupe nitro, alkyle en $C_1$ à $C_4$, alkoxy en $C_1$ à $C_4$, alkylamino en $C_1$ à $C_4$, alkylmercapto en $C_1$ à $C_4$, phénylmercapto éventuellement substitué par un radical alkyle en $C_1$ à $C_4$, alkoxy en $C_1$ à $C_4$, du fluor, du chlore, du brome ou un radical nitro, (alkoxy en $C_1$ à $C_4$)-carbonyle, (alkyle en $C_1$ à $C_4$)-carbonyle, benzylamino, cyclohexylamino, phénylamino éventuellement substitué par un radical alkyle en $C_1$ à $C_4$, alkoxy en $C_1$ à $C_4$, du chlore, du brome ou un radical nitro, un groupe carboxy, hydroxy, carbamoyle monosubstitué ou disubstitué le cas échéant par un radical alkyle en $C_1$ à $C_4$, benzyle ou phényle, le radical phényle pouvant être substitué par un radical alkyle en $C_1$ à $C_4$, alkoxy en $C_1$ à $C_4$, du fluor, du chlore, du brome ou un radical nitro, un groupe (alkyle en $C_1$ à $C_4$)-carbonylamino, un groupe benzoylamino éventuellement substitué par un radical alkyle en $C_1$ à $C_4$, alkoxy en $C_1$ à $C_4$, du chlore, du brome ou un radical nitro, un groupe (alcane en $C_1$ à $C_4$)-sulfonylamino, ou un groupe benzènesulfonylamino éventuellement substitué par un radical alkyle en $C_1$ à $C_4$, alkoxy en $C_1$ à $C_4$, du fluor, du chlore, du brome ou un radical nitro et

$R_7$ est l'hydrogène, un halogène tel que le fluor, le chlore et le brome, ou un groupe hydroxy.

3. Composés azométhiniques d'anthraquinone, qui, sous l'une de leurs formes tautomères, répondent à la formule

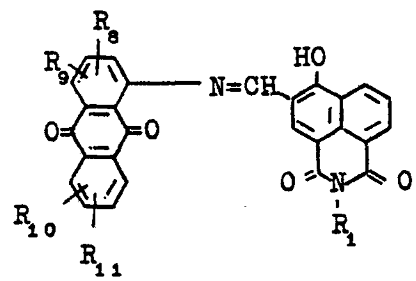

(V)

dans laquelle

$R_1$ a la définition indiquée ci-dessus et

$R_8$, $R_9$, $R_{10}$, $R_{11}$ représentent l'hydrogène, le chlore, le brome, un groupe carboxy, (alkoxy en $C_1$ à $C_4$)-carbonyle, carbamoyle (alkyle en $C_1$ à $C_4$)-carbonylamino, un groupe benzoylamino éventuellement substitué par un ou deux radicaux nitro ou 1 à 5 atomes de chlore ou de brome, un groupe (alcane en $C_1$ à $C_4$)-sulfonylamino, ou un groupe benzènesulfonylamino éventuellement substitué par un radical méthyle, méthoxy ou du chlore, ou un reste de formule :

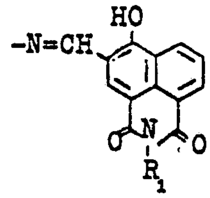

(VI)

4. Procédé de production de pigments de composés azométhiniques d'anthraquinone, caractérisé en ce qu'on condense des amino-anthraquinones de formule

$$A\text{—}(\text{—}NH_2)_m \qquad (III)$$

dans laquelle

A et m ont la définition indiquée dans la revendication 1, avec des 3-alkoxyméthylène-4-hydroxynaphtalimides de formule :

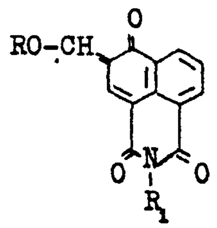

(IX)

dans laquelle

R désigne de préférence un groupe alkyle en $C_1$ à $C_4$ et

$R_1$ a la définition indiquée dans la revendication 1, dans un milieu réactionnel organique à 100-220 °C, de préférence à 120-180 °C.

5. Procédé de production de pigments de composés azométhiniques anthraquinone, caractérisé en ce qu'on condense des formimino-esters avec des amino-anthraquinones de formule

$$A—(—N=CH-OR)_m \quad \text{(X)}$$

dans laquelle

A et m ont la définition indiquée dans la revendication 1 et

R désigne de préférence un groupe alkyle en $C_1$ à $C_4$, avec des 4-hydroxynaphtalimides de formule

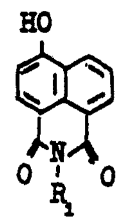

(VII)

dans laquelle

$R_1$ a la définition indiquée dans la revendication 1, dans un milieu réactionnel organique à 100-220 °C de préférence à 120-180 °C.

6. Procédé de production de composés azométhiniques d'anthraquinone, caractérisé en ce qu'on condense des halogénures de formamidinium de formule

$$A—[—NH-CH=\overset{\oplus}{N}(R)_2]_m X^{\ominus}_m \quad \text{(XI)}$$

dans laquelle

A et m ont la définition indiquée dans la revendication 1,

R désigne de préférence un groupe alkyle en $C_1$ à $C_4$ et

X représente du chlore ou du brome, avec des 4-hydroxynaphtalinimides de formule

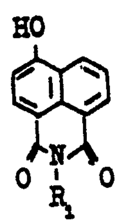

(VII)

dans laquelle

$R_1$ a la définition indiquée dans la revendication 1, dans un milieu réactionnel organique à 100-220 °C, de préférence à 120-180 °C.

7. Procédé de pigmentation de matières organiques macromoléculaires, caractérisé en ce qu'on utilise des pigments anthraquinoniques suivant les revendications 1 à 3.

8. Des matières macromoléculaires organiques pigmentées avec les composés anthraquinoniques suivant les revendications 1 à 3.